Europäisches Patentamt

European Patent Office

Office européen des brevets

(11) Publication number: **0 081 227**
**B1**

# EUROPEAN PATENT SPECIFICATION

(45) Date of publication of patent specification: **18.03.87**

(51) Int. Cl.⁴: **G 21 K 1/00,** G 01 N 23/04, H 04 N 5/32

(21) Application number: **82111277.8**

(22) Date of filing: **06.12.82**

(54) **Energy-selective X-ray recording and readout system.**

(30) Priority: **07.12.81 US 327770**

(43) Date of publication of application:
**15.06.83 Bulletin 83/24**

(45) Publication of the grant of the patent:
**18.03.87 Bulletin 87/12**

(84) Designated Contracting States:
**DE FR GB NL**

(56) References cited:
**GB-A-2 020 939**
**US-A-3 766 383**
**US-A-3 848 130**
**US-A-3 965 358**
**US-A-4 029 963**
**US-A-4 247 774**

(73) Proprietor: **Macovski, Albert**
**2505 Alpine Road**
**Menlo Park California 94025 (US)**

(72) Inventor: **Macovski, Albert**
**2505 Alpine Road**
**Menlo Park California 94025 (US)**

(74) Representative: **Dipl.-Phys.Dr. Manitz Dipl.-Ing.**
**Finsterwald Dipl.-Ing. Grämkow Dipl.-Chem.Dr.**
**Heyn Dipl.-Phys.Rotermund,**
**B.Sc. Morgan Robert-Koch-Strasse 1**
**D-8000 München 22 (DE)**

Courier Press, Leamington Spa, England.

## Description

This invention relates to a method and apparatus for acquiring x-ray image date at two energy spectra, and to apparatus for reading the information stored on two registered transparencies acquired by said method. In a primary application the invention relates to diagnostic x-ray systems where selected images are created representing specific body materials.

In US—A—4 029 963 issued to R. E. Alvarez and A. Macovski a method was described of acquiring and processing x-ray images at two energy spectra. The processed images can subsequently be used to selectively image various body materials. In the referenced patent two photosensitive emulsions are exposed using two scintillating screens separated by an optically opaque layer, which is transparent to x-rays. One problem with the system shown is that of achieving sufficient separation of the two energy spectra used to obtain the two acquired images. When these spectra have significant spectral overlap, with relatively small separation in the average energies, the resultant processed images have poor signal-to-noise ratio.

Another problem with the method shown in that patent is that of registration. In the system shown, the films representing each energy spectrum are scanned independently. This can often result in misregistration with the processed images becoming distorted. This registration problem was solved in US—A—4 413 353 "X-Ray Encoding Systems Using an Optical Grating" invented by R. E. Alvarez, A. Macovski and B. Strul. In that document the information is encoded using an optical grating. Here the two images are represented by different spatial frequencies and can thus remain perfectly registered. In this system, however, the readout operation requires resolving the very high spatial frequencies of the optical gratings. Thus much of the resolution capacity of the optical scanner is used for the grating frequencies.

An object of this invention is to provide a method of acquiring x-ray projection data onto photographic film at different x-ray spectra with good spectra separation.

It is a further object of this invention to provide a method for reading out the acquired data in good registration without requiring excess spatial resolution.

It is a further object of this invention to provide a dual film system which enables data acquisition with good spectral separation and readout in good registration.

In order to satisfy these objects there is provided, in accordance with the present invention, and starting from the prior art of US—A—4 029 963, a method for acquiring x-ray image date at two energy spectra comprising the steps of projecting an x-ray beam through a body onto a first scintillating screen coupled to a first photographic emulsion, and projecting the x-ray beam onto a second scintillating screen coupled to a second photographic emulsion, characterised in that the x-ray beam is filtered after passing, through the first scintillating screen. The present invention also comprises an apparatus for acquiring x-ray images of an object at two energy data comprising an x-ray source producing an x-ray beam; means for transmitting the beam through the object onto a first scintillating screen nearest the x-ray source; means for storing the light image emitted from the first scintillating screen on a first photosensitive surface adjacent to the first scintillating screen; a second scintillation screen parallel to the first scintillating screen and receiving the x-ray beam transmitted by the first scintillating screen; and a second photosensitive surface adjacent to the second scintillating screen for storing the light image emitted by the second scintillating screen; characterised in that an optically opaque layer which selectively filters the x-ray beam is placed between the first and second scintillating screens.

A beam hardening filter is preferably placed between the two screens to increase the spectral separation of the two acquired images. An additional x-ray filter may be advantageously used at the x-ray source having a K-absorption edge in the region of spectral overlap to increase the spectral separation. The individual films are preferably joined at at least one edge to assure registration on readout.

Apparatus for reading the information stored on two registered transparencies acquired by the above method is characterised in that it comprises a partially reflecting mirror to be positioned between the two transparencies; means for illuminating the combination of the two transparencies and the partially reflecting mirror; means for detecting the amplitude of light passing through the first transparency, reflected by the partially reflecting mirror and retransmitted through the first transparency; means for detecting the amplitude of light transmitted through the first transparency, the partially reflecting mirror, and the second transparency; and means for processing the two detected signals to provide processed signals representing the information on each transparency.

The transmitted light represents the sums of the two film densities while the reflected light represents the density of the first film only. The resultant signals are processed to provide individual representations of the high and low energy acquired data.

Preferred embodiments of the method and apparatus of the invention are described in dependent claims 2 to 3, 5 to 7 and 9 to 12.

For a more complete disclosure of the invention reference may be made to the following description of several illustrative embodiments thereof which is given in conjunction with the accompanying drawings, of which:

Figure 1 is a schematic illustrating an embodiment of the invention;

Figure 2 illustrates graphs describing the performance of the invention;

Figure 3 illustrates another graph describing the performance of the invention;

Figure 4 is a schematic illustration of an embodiment of a readout system;

Figure 4a is a closeup of a portion of the readout system;

Figures 5a, 5b and 5c are alternate embodiments of dual film systems;

Figure 6 is a block diagram of the signal processing system used in the invention;

Figure 7 is an embodiment of a dual screen system;

Figure 8 is an alternate embodiment of a readout system using a television camera; and

Figure 9 is an alternate embodiment of a readout system using a drum scanner.

An understanding of the broad aspects of the invention may best be had by reference to Fig. 2 of the drawings. It is desired to make selective projection images of specific materials of object 10, usually the human anatomy, by making measurements at two energy spectra and processing the measurements. As shown, an x-ray beam 12, produced by source 11 is projected through object 10 onto a parallel array consisting of scintillating screens 14 and 20, substrates 15 and 18 with their respective photosensitive surfaces 16 and 19, and an optically opaque x-ray filter 17. As described in the prior art, the lower energy x-rays are selectively absorbed in the first screen 14 with the higher energy x-rays passing onto screen 20. The light from these screens is recorded on photosensitive surfaces 16 and 19 respectively.

Figure 2 illustrates typical response spectra for the two screens as graph 30 for screen 14 and graph 31 for screen 20. As is seen the lower energy graph 30 and the higher energy graph 31 have considerable overlap. This reduces the separation in their average energies and seriously limits the ability of subsequent processing systems. The net result is poor signal-to-noise ratio in the resultant processed selected images.

This problem is greatly alleviated by using x-ray filter 17 between the two screens. This filter can be designed to increase the spectral separation. For example, filter 17 can be an x-ray beam-hardening material, such as copper, which selectively absorbs lower energies. As shown in the dashed line in Fig. 2, graph 32 illustrates the response of screen 20 with the beam-hardening filter 17. The separation is significantly increased, resulting in improved signal-to-noise ratio. The thickness and material used in filter 17 are a compromise between spectral separation and the attenuation of the desired higher energy x-ray photons. In addition, filter 17 should be optically opaque to prevent optical cross talk where the light produced by the two screens would reach the opposite photosensitive surface. Clearly a unique type of film system is required to enable insertion of filter 17, as will be subsequently discussed.

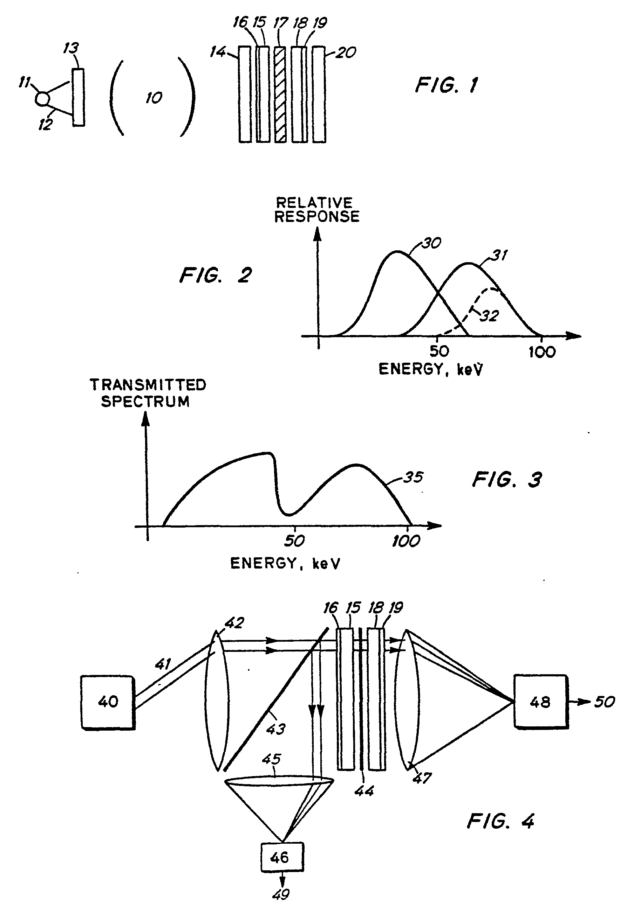

To further provide spectral separation filter 13 is placed between the x-ray source 11 and object 10. This filter has a K-absorption edge in the vicinity of the region of overlap between the two spectra. The graph of the transmitted spectra of this filter is illustrated in Fig. 3. As shown, the K-absorption edge attenuates the region of overlap, thus providing further spectral separation. Representative materials having K edges in this region are the rare earths such as europium and gadolinium, and other materials such as tungsten and tantalum. One desirable characteristic of the filter is attenuation of the tungsten characteristic emission lines from the x-ray source. These tend to reduce the spectral separation.

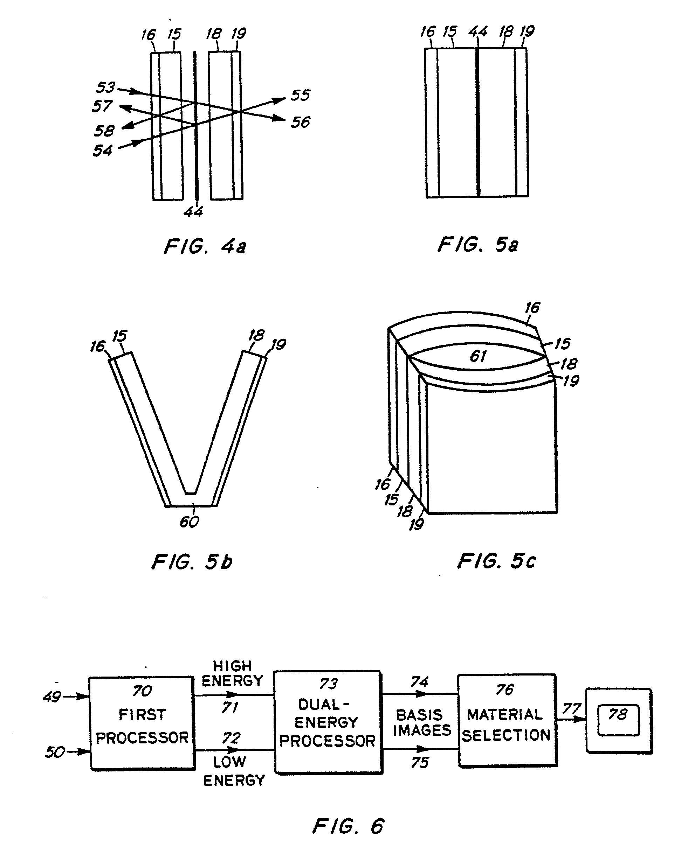

Having recorded separable spectral information on the two photosensitive surfaces 16 and 19, we must now read them out, after a suitable image development process where photosensitive emulsions 16 and 19 become transparencies. This is accomplished, as shown in Fig. 4, by placing a partially reflecting mirror 44 between substrates 15 and 18. Here again the unique configuration of the film system, to be described, enables the partially reflecting mirror to be inserted. This mirror can consist of a metallic layer on some substrate such as mylar. The metal film can be sandwiched between two plastic layers to protect it from scratching.

The partially reflecting mirror enables the readout of two signals; a first signal due to light passing through transparency 16, being reflected by mirror 44 and passing back through transparency 16 and being detected by detector 46, and a second signal due to light passing through transparency 16, mirror 44 and transparency 19 and being detected by detector 48. Thus the signal detected by detector 46 represents the first transparency and the signal detected by detector 48 represents the product of both transparencies. Appropriate processing can provide signals representing each transparency. In this way the data are read out with a single light beam, insuring perfect registration. Systems can be used with fully reflecting mirrors and separate scanning beams on each side reading the individual transparencies. These, however, would suffer from potential misregistration problems.

Taking a detailed study of Fig. 4, light beam scanner 40, preferably a laser scanner, produces scanned light beam 41. This is collimated using lens 42. The collimated beam passes through partially reflecting mirror 43 through transparency 16 onto partially reflecting mirror 44. The light reflected from 44 goes back through transparency 16, is reflected by partially reflecting mirror 43 onto collecting lens 45 where it is concentrated onto photocell detector 46 to provide signal 49. The light transmitted by mirror 44 passes through transparency 19 and is collected by collecting lens 47 and concentrated onto photocell detector 48 to form signal 50. These scanned signals, 49 and 50, define the information stored on the two transparencies.

Figure 4a is a detailed look at an embodiment of a focusing system. Here the incoming scanned light beam is represented by converging rays 53 and 54. These are transmitted through mirror 44 and focus on transparency 19, then diverge to form rays 55 and 56 where they go on to detector 48. The rays reflected from mirror 44 focus onto transparency 16, then diverge to rays 57 and 58 where they go on to detector 46. Thus the detected signals include focused components of both transparencies.

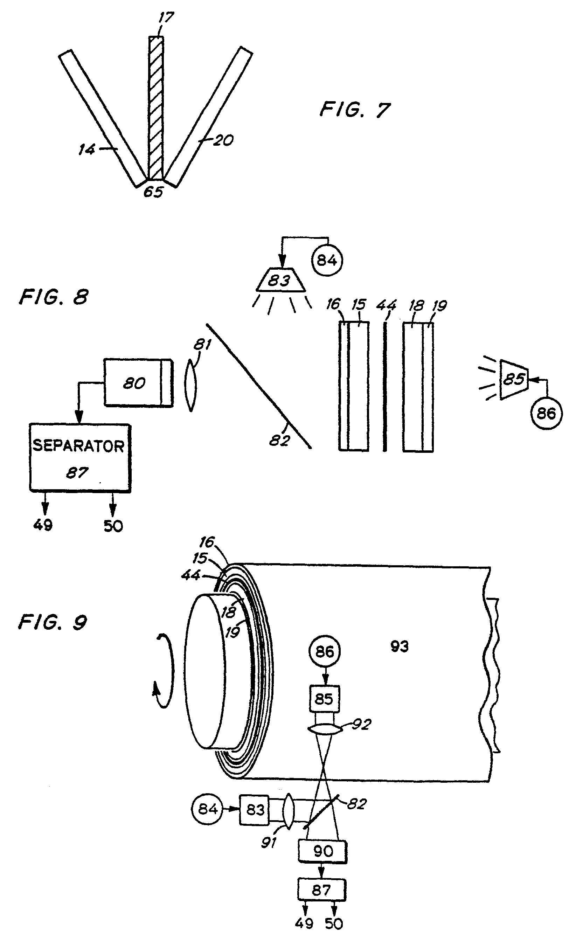

The photosensitive substrates 16 and 19 and their substrates 15 and 18 can be used in a variety of configurations. In Fig. 5a the partially reflecting mirror 44 is bonded to the substrates to form a single bonded sandwich of the various layers. This sandwich can be used in the scanner of Fig. 4 and in the subsequently described scanners of Figs. 8 and 9. It cannot, however, be used in the system of Fig. 1 where an x-ray filter 17 is placed between the photosensitive surfaces. It therefore cannot use that mechanism of improved spectral separation because of its bonded nature. However, the spectral separation mechanism of x-ray filter 13 can continue to be used.

In order to enable the use of x-ray filter 17, a mechanism must be provided of inserting a layer between the substrates 15 and 18. One method is shown in Fig. 5b wherein the substrates 15 and 18 are connected or hinged at one end with connecting section 60. This is simply a plastic connection bonding the films at one end. When the x-ray film is exposed as in Fig. 1, the beam-hardening x-ray filter 17 can be placed between substrates 15 and 18. On readout, a partially reflecting mirror 44 is placed between the substrates. The recorded transparencies 16 and 19 remain in perfect registration because they remain connected.

To provide even greater restraint on the relative movement of the individual transparencies the configuration shown in Fig. 5c can be used where the substrates 15 and 18 are joined on three edges, forming an envelope. Here substrates 15 and 18 are connected at every edge except the top. Opening 61 can be used for inserting x-ray hardening filter 17 on recording and partially reflecting mirror 44 when reading. The configurations of 5b and 5c are exemplary of a variety of possibilities which allow insertion of an intermediate layer. For example, the substrates can be joined at two adjacent edges with an open flap, or at specific points around the edges whereby registration of developed transparencies 16 and 19 is maintained.

The detected signals 49 and 50 in Fig. 4 are processed as shown in Fig. 6. To a first approximation, the resultant light transmission of each transparency represents the desired log of the x-ray intensity. Thus first processor 70 in Fig. 6 can initially compensate for nonlinearities in the H-D curve of the film emulsion. In addition, it is desired to provide signals which represent the individual transmissions of each transparency. Signal 49 directly represents the signal due to traversing transparency 16 twice or $\tau_1^2$. Signal 50 represents the transmission through both transparencies $\tau_1\tau_2$. One method of processing involves taking the square root of signal 49 to provide $\tau_1$, and then dividing signal 50 by $\tau_1$ to provide $\tau_2$. These can then go through appropriate linearity correction to provide signals representing the logs of the high and low energy x-ray intensities, 71 and 72.

These signals are passed on to dual energy processor 73 which is described in the previously referenced U.S. patent 4,029,963. This processor, using nonlinear combinations of 71 and 72, provides linearized basic images 74 and 75. These can either represent the photoelectric and Compton scattering components, or preferably the equivalent amounts of specific materials used in calibration such as aluminum and plastic. Weighted sums or differences of these basic components are taken in 76 to allow a variety of material selection capabilities such as the elimination or enhancement of any material. The selected image is displayed in display monitor 78.

Figure 7 illustrates an embodiment of a cassette used in the x-ray recording process. Here scintillation screens 14 and 20 are hinged, as in existing film-screen cassettes, to facilitate the insertion of a dual emulsion film. In addition, however, the beam-hardening filter 17 is affixed to the hinge 65. This enables the various separated film structures, as shown in Figs. 5b and 5c, to be placed with filter 17 between the film emulsions. In this way the important energy spectrum separation is enhanced.

Figure 4 shows a readout system using a single scanning light beam. Figures 8 and 9 show another general approach to readout using two light sources. A front light source 83, on the detector side, illuminates the first transparency with its light reflected by mirror 82 into the detector. A second light source 85, behind the films, transmits through both transparencies to the detector. These light sources require some type of encoding so that they can be distinguished by the detector. This encoding can be temporal, spatial, color, polarization, etc.

In Fig. 8 front light source 83 is driven by generator 84 with back light source 85 driven by generator 86. The light from 83 is reflected from partially reflecting mirror 82 through transparency 16 and reflected back through transparency 16 from partially reflecting mirror 44. This reflected light is imaged onto TV camera 80 using lens 81. Similarly the light from 85 is transmitted through transparencies 19 and 16 and is imaged onto camera 80 with lens 81.

To separate these signals, the lights 83 and 85 can be turned on alternately using generators 84 and 86. Thus a first frame is scanned by camera 80 representing the reflected light with 83 on and a second frame representing the transmitted light with 85 on. The separator 87, in this case is a video storage system which stores at least the first frame. Thus signals 49 and 50 are generated which, as before, represent the light transmitted and reflected through 16 and the light transmitted through both 19 and 16.

Other encoding systems can be used where the transparencies 16 and 19 are scanned simultaneously. Lights 83 and 85 can be of different colors with camera 80 a color camera. Here signals 49 and 50 would simply represent the different color signals. Also lights 83 and 85 could project different spatial patterns onto the transparencies which could be distinguished by processing the camera output signal. For example, gratings of different frequencies could be projected with separator 87 consisting of filters which separate the two frequencies representing the two transparency combinations. Generators 84 and 86 can also be high frequency signals which turn the lights on and off at a relatively high rate. In that case camera 80 must be a non-storage instantaneous camera such as an image dissector to produce the high frequency signals which distinguish the two sources of illumination.

Since some television cameras have limited resolution capability, Fig. 9 illustrates the same system applied to a drum scanner where relatively high resolution can be realized. Here the sandwiched layers of the two substrates 15 and 18 with the intermediate reflector 44 are wound around rotating drum 93. Light source 85 and lens 92 are inside the drum. They are fixed so that they do not rotate or translate with the drum. The light from 85 is focused onto the transparencies 16 and 19 using lens 92. Similarly the light from source 83 is reflected off partially reflecting mirror 82 and focused onto the transparencies using lens 91. The resultant light from both sources, after interacting with the transparencies, passes through mirror 82 onto detector 90. The signal from detector 90 is passed through signal separator 87 which, as before, provides signals 49 and 50 representing the individual light sources.

The encoding, as before, can be achieved by alternately turning lights 85 and 83 on and off using generators 86 and 84 respectively. This should be accomplished at the rate new picture elements are scanned past the focal region. Separator 87 will alternately switch the detector output to 49 and 50 to provide the required signal separation. Filters can be used to remove the high frequency switching components. As before the light sources can have different colors with detector 90 being a dual detector with different color filters on each photocell. Each output will then directly provide the separable signals 49 and 50.

Systems of this type often require a high degree of accuracy. The separation of the signals from the two transparencies is based on assumed properties of the partially reflecting mirror 44. To insure that variations in the reflectivity and transmission of the mirror do not cause errors, it can be scanned, with any of the systems shown, in the absence of the transparencies 16 and 19 on substrates 18 and 15. Any variations can be recorded and stored. These can be used to correct signals 49 and 50 to avoid errors in the reproduced selective material images.

It should be emphasized that the readout systems shown in Figs. 4, 8 and 9 have the special quality of automatic perfect registration of the two transparencies. A variety of alternate scanning systems can be used which do not provide automatic perfect registration. These can, however, provide adequate registration if care is taken. For example, if the transparencies can be opened up, as in the configuration of Fig. 5b, they can be scanned separately or in sequence. Registration marks can be placed on each transparency to electronically identify the relative position of the two transparencies.

If the configuration of Fig. 5c is used, a dual fully reflecting mirror can be inserted between the substrates 15 and 18. In that case the individual transparencies can be scanned individually or in sequence from each side. These methods, however, do not have the automatic registration features of the previously described system.

## Claims

1. A method for acquiring x-ray image data at two energy spectra comprising the steps of:

projecting an x-ray beam (12) through a body (10) onto a first scintillating screen (14) coupled to a first photographic emulsion (16), and

projecting the x-ray beam onto a second scintillating screen (20) coupled to a second photographic emulsion (19), characterised in that the x-ray beam is filtered after passing, through the first scintillating screen.

2. The method according to claim 1, wherein the step of filtering the x-ray beam includes the step of hardening the x-ray beam by selectively attenuating the lower energy region of the spectrum.

3. The method according to claims 1 or 2, characterised in that the energy spectrum separation between the two cascaded energy-selective x-ray detectors is increased by filtering the x-ray source (11) with a material (13) having a K-absorption edge substantially in the region of significant overlap of the overall spectrum of the two detectors.

4. Apparatus for acquiring x-ray images of an object at two energy data comprising:

an x-ray source (11) producing an x-ray beam (12);

means for transmitting the beam through the object (10) onto a first scintillating screen (14) nearest the x-ray source;

means for storing the light image emitted from the first scintillating screen (14) on a first photosensitive surface (16) adjacent to the first scintillating screen;

a second scintillation screen (20) parallel to the first scintillating screen and receiving the x-ray beam transmitted by the first scintillating screen; and

a second photosensitive surface (19) adjacent to the second scintillating screen for storing the light image emitted by the second scintillating screen; characterised in that an optically opaque layer (17) which selectively filters the x-ray beam is placed between the first and second scintillating screens (14, 20).

5. Apparatus according to claim 4, characterised in that the optically opaque layer is an x-ray beam hardening filter which selectively attenuates the lower energy x-rays transmitted to the second scintillating screen.

6. Apparatus according to claims 4 or 5, characterised in that it comprises an x-ray filter (13) for filtering the x-ray source (11) with a material having a K-absorption edge substantially in the region of significant overlap of the overall spectrum of the two detectors.

7. Apparatus according to claims 4, 5 or 6, characterised by means (65) for separating the two screens and the optically opaque layer so that a first substrate with a photosensitive surface can be inserted between the first scintillating screen and the optically opaque x-ray filtering layer and a second substrate with a photosensitive surface can be inserted between the second scintillating screen and the optically opaque layer (Fig. 7).

8. Apparatus for reading the information stored on two registered transparencies acquired by the method of claims 1, 2 or 3 characterised in that it comprises

a partially reflecting mirror (44) to be positioned between the two transparencies (16, 19);

means (40; 83, 85) for illuminating the combination of the two transparencies and the partially reflecting mirror;

means (46, 80; 90) for detecting the amplitude of light passing through the first transparency (16), reflected by the partially reflecting mirror (44) and retransmitted through the first transparency;

means (48; 80; 90) for detecting the amplitude of light transmitted through the first transparency (16), the partially reflecting mirror (44), and the second transparency (19); and

means (70) for processing the two detected signals to provide processed signals representing the information on each transparency.

9. Apparatus according to claim 8, characterised in that the two registered transparencies (16, 19) are disconnected on at least one edge whereby the partially reflecting mirror (44) can be inserted.

10. Apparatus according to claim 8, characterised in that the partially reflecting mirror is permanently enclosed between the two registered transparencies.

11. Apparatus according to claim 8, characterised in that the means (30) for illuminating the two transparencies is a scanning light beam and the detecting means includes a first detector (46) detecting the reflected light beam and

a second detector (48) detecting the transmitted light beam.

12. Apparatus according to claim 8, characterised in that the means for illuminating the two transparencies comprises a first encoded light source (83) illuminating the side having the first transparency (16), a second encoded light source (85) illuminating the side having the second transparency (19), whereby a single detector means (80; 90) separately detects the reflected light passing through the first transparency (16) and the transmitted light passing through both transparencies (16, 19).

**Revendications**

1. Procédé pour l'acquisition de données d'images radiographiques à deux spectres d'énergie, comprenant les étapes qui consistent:

à projeter un faisceau (12) de rayons X à travers un corps (10) sur un premier écran (14) à scintillation couplé à une première émulsion photographique (16), et

à projeter la faisceau de rayons X sur un second écran (20) à scintillation couplé à une seconde émulsion photographique (19), caractérisé en ce que le faisceau de rayons X est filtré après être passé à travers le premier écran à scintillation.

2. Procédé selon la revendication 1, dans lequel l'étape de filtrage du faisceau de rayons X consiste à durcir le faisceau de rayons X par une atténuation sélective de la bande d'énergie inférieure du spectre.

3. Procédé selon les revendications 1 ou 2, caractérisé en ce que la séparation spectrale d'énergie entre les deux détecteurs de rayons X en cascade, sélectifs envers l'énergie, est accrue par le filtrage de la source (11) de rayons X avec une matière (13) ayant une discontinuité d'absorption K sensiblement dans la zone du recouvrement notable du spectre global des deux détecteurs.

4. Appareil pour l'acquisition d'images radiographiques d'un objet à deux niveaux d'énergie, comprenant:

une source (11) de rayons X produisant un faisceau (12) de rayons X;

des moyens destinés à transmettre le faisceau à travers l'objet (10) sur un premier écran (14) à scintillation le plus proche de la source de rayons X;

des moyens destinés à emmagasiner l'image lumineuse émise par le premier écran (14) à scintillation sur une première surface photosensible (16) adjacente au premier écran à scintillation;

un second écran (20) à scintillation parallèle au premier écran à scintillation et recevant le faisceau de rayons X transmis par le premier écran à scintillation; et

une seconde surface photosensible (19) adjacente au second écran à scintillation afin de mémoriser l'image lumineuse émise par le second écran à scintillation; caractérisé en ce qu'une couche optiquement opaque (17), qui filtre sélectivement le faisceau de rayons X, est placée entre les premier et second écrans à scintillation (14, 20).

5. Appareil selon la revendication 4, caractérisé en ce que la couche optiquement opaque est un filtre durcissant le faisceau de rayons X qui atténue sélectivement les rayons X d'énergie inférieure transmis vers le second écran à scintillation.

6. Appareil selon les revendications 4 ou 5, caractérisé en ce qu'il comprend un filtre (13) à rayons X destiné à filtrer la source (11) de rayons X avec une matière ayant une discontinuité d'absorption K sensiblement dans la zone de recouvrement notable du spectre global des deux détecteurs.

7. Appareil selon les revendications 4, 5 ou 6, caractérisé par des moyens (65) destinés à séparer les deux écrans et la couche optiquement opaque afin qu'un premier substrat, présentant une surface photosensible, puisse être inséré entre le premier écran à scintillation et la couche de filtrage des rayons X optiquement opaque et qu'un second substrat présentant une surface photosensible puisse être inséré entre le second écran à scintillation et la couche optiquement opaque (figure 7).

8. Appareil pour lire l'information mémorisée sur deux diapositives alignées acquise par le procédé des revendications 1, 2 ou 3, caractérisé en ce qu'il comprend

un miroir partiellement réfléchissant (44) destiné à être placé entre les deux diapositives (16, 19);

des moyens (40; 83, 85) destinés à éclairer l'ensemble des deux diapositives et le miroir partiellement réfléchissant;

des moyens (46; 80; 90) destinés à détecter l'amplitude de la lumière passant à travers la première diapositive (16), réfléchie par le miroir partiellement réfléchissant (44) et retransmise à travers la première diapositive;

des moyens (48; 80; 90) destinés à détecter l'amplitude de la lumière transmise à travers la première diapositive (16), le miroir partiellement réfléchissant (44) et la seconde diapositive (19); et des moyens (70) destinés à traiter les deux signaux détectés pour produire les signaux traités représentant l'information portée par chaque diapositive.

9. Appareil selon la revendication 8, caractérisé en ce que les deux diapositives cadrées (16, 19) sont séparées suivant au moins un bord afin que le miroir partiellement réfléchissant (44) puisse être inséré.

10. Appareil selon la revendication 8, caractérisé en ce que le miroir partiellement réfléchissant est enfermé de façon permanente entre les deux diapositives alignées.

11. Appareil selon la revendication 8, caractérisé en ce que les moyens (40) destinés à éclairer les deux diapositives comprennent un faisceau lumineux de balayage et les moyens de détection comprennent un premier detecteur (46) détectant le faisceau lumineux réfléchi et un second détecteur (48) détectant le faisceau lumineux transmis.

12. Appareil selon la revendication 8, caractérisé en ce que les moyens destinés à éclairer les deux diapositives comprennent une première source de lumière codée (83) éclairant le côté possédant la première diapositive (16), une seconde source de lumière codée (85) éclairant le côté ayant la seconde diapositive (19), afin qu'un seul détecteur (80; 90) détecte séparément la lumière réfléchie passant à travers la première diapositive (16) et la lumière transmise passant à travers les deux diapositives (16, 19).

**Patentansprüche**

1. Verfahren zum Erfassen von Röntgen-Bilddaten bei zwei Energiespektren mit den Schritten:

Projizieren eines Röntgenstrahlbündels (12) durch einen Körper (10) auf einen ersten Szintillationsschirm (14), der mit einer ersten fotografischen Emulsion (16) gekoppelt ist, und Projizieren des Röntgenstrahlbündels auf einen zweiten Szintillationsschirm (20), der mit einer zweiten fotografischen Emulsion (19) gekoppelt ist, dadurch gekennzeichnet, daß das Röntgenstrahlbündel nach Durchlaufen des ersten Szintillationsschirmes gefiltert wird.

2. Verfahren nach Anspruch 1, bei dem der Schritt des Filterns des Röntgenstrahlbündels den Schritt des Härtens des Röntgenstrahlbündels durch selektives Schwächen des unteren Energiebereiches des Spektrums enthält.

3. Verfahren nach Anspruch 1 oder 2, dadurch gekennzeichnet, daß die Energie-Spektraltrennung zwischen den zwei kaskadierten energieselektiven Röntgenstrahldetektoren erhöht wird durch Filtern der Röntgenstrahlquelle (11) mit einem Material (13) mit einer K-Absorptionskante, die im wesentlichen im Bereich der signifikanten Überdeckung der Gesamtspektren der beiden Detektoren liegt.

4. Vorrichtung zum Erfassen von Röntgenbildern eines Objektes bei zwei Energiedaten mit:

einer ein Röntgenstrahlbündel (12) erzeugenden Röntgenstrahlquelle (11);

Mitteln zum Aussenden des Bündels durch das Objekt (10) auf einen ersten, der Röntgenstrahlquelle zunächst gelegenen Szintillationsschirm (14);

Mitteln zum Speichern des von dem ersten Szintillationsschirm (14) emittierten Licht-Abbildes auf eine erste, dem ersten Szintillationsschirm benachbarte lichtempfindliche Fläche (16);

einem zweiten Szintillationsschirm (20), parallel zum ersten Szintillationsschirm, der das durch den ersten Szintillationsschirm durch gelassene Röntgenstrahlbündel erhält; und

eine zweite, dem zweiten Szintillationsschirm benachbarte lichtempfindliche Fläche (19) zum Speichern des durch den zweiten Szintillationsschirm emittierten Licht-Abbildes; dadurch gekennzeichnet, daß eine optisch undurchsichtige Schicht (17), die selektiv das Röntgenstrahlbündel filtert, zwischen den ersten und den zweiten Szintillationsschirm (14, 20) gesetzt ist.

5. Vorrichtung nach Anspruch 4, dadurch gekennzeichnet, daß die optisch undurchsichtige Schicht ein Röntgenstrahlbündel härtendes Filter ist, welches selektiv die zu dem zweiten Szintillationsschirm durchgelassenen Röntgenstrahlen niedriger Energie schwächt.

6. Vorrichtung nach Anspruch 4 oder 5, dadurch gekennzeichnet, daß sie ein Röntgenstrahlfilter (13) zum Filtern der Röntgenstrahlquelle (11) enthält mit einem Material, das eine K-Absorptionskante im wesentlichen im Bereich der signifikanten Überdeckung der Gesamtspektren der beiden Detektoren besitzt.

7. Vorrichtung nach einem der Ansprüche 4, 5 oder 6, gekennzeichnet durch Mittel (65) zum Trennen der beiden Schirme und der optisch undurchsichtigen Schicht, so daß ein erstes Substrat mit einer lichtempfindlichen Fläche zwischen den ersten Szintillationsschirm und die optisch undurchsichtige Röntgenstrahl-Filterschicht eingesetzt werden kann und ein zweites Substrat mit einer lichtempfindlichen Fläche zwischen den zweiten Szintillationsschirm und die optisch undurchsichtige Schicht eingesetzt werden kann (Fig. 7).

8. Vorrichtung zum Lesen der an zwei miteinander ausgerichteten Transparentbildern gespeicherten Information, die durch das Verfahren nach Ansprüchen 1, 2 oder 3 erfaßt wurde, dadurch gekennzeichnet, daß die Vorrichtung enthält einen teilreflektierenden Spiegel (44) zum Einsetzen zwischen die beiden Transparentbilder (16, 19);

Mittel (40; 83, 85) zum Beleuchten der Kombination aus den beiden Transparentbildern und dem teilreflektierenden Spiegel;

Mittel (46; 80; 90) zum Erfassen der Amplitude von durch das erste Transparentbild hindurchgeleitetem, durch den teilreflektierenden Spiegel (44) reflektiertem und wieder durch das erste Transparentbild hindurchgesendetem Licht;

Mittel (48; 80; 90) zum Erfassen der Amplitude von durch das erste Transparentbild (16), den teilreflektierenden Spiegel (44) und das zweite Transparentbild (19) hindurchgesendetem Licht; und

Mittel (70) zum Verarbeiten der beiden erfaßten Signale, um verarbeitete Signale zu schaffen, die die Information an jedem Transparentbild repräsentieren.

9. Vorrichtung nach Anspruch 8, dadurch gekennzeichnet, daß die beiden miteinander ausgerichteten Transparentbilder (16, 19) an mindestens einer Kante voneinander gelöst sind, wodurch der teilreflektierende Spiegel (44) eingesetzt werden kann.

10. Vorrichtung nach Anspruch 8, dadurch gekennzeichnet, daß der teilreflektierende Spiegel permanent zwischen den beiden ausgerichteten Transparentbildern eingeschlossen ist.

11. Vorrichtung nach Anspruch 8, dadurch gekennzeichnet, daß das Mittel (40) zum Beleuchten der beiden Transparentbilder ein Abtast-Lichtstrahl ist und daß das Erfassungsmittel einen ersten Detektor (46) enthält, der den reflektierten Lichtstrahl erfaßt und einen zweiten Detektor (48), der den durchgesendeten Lichstrahl erfaßt.

12. Vorrichtung nach Anspruch 8, dadurch gekennzeichnet, daß das Mittel zum Beleuchten der beiden Transparentbilder eine erste, die Seite mit dem ersten Transparentbild (16) beleuchtende kodierte Lichtquelle (83) und eine zweite, die Seite mit dem zweiten Transparentbild (19) beleuchtende kodierte Lichtquelle (85) umfaßt, wodurch je ein einzelnes Detektormittel (80; 90) getrennt das durch das erste Transparentbild (16) hindurchtretende reflektierte Licht und das durch beide Transparentbilder (16, 19) hindurchtretende ausgesendete Licht erfaßt.

FIG. 1

FIG. 2

RELATIVE
RESPONSE

ENERGY, keV

TRANSMITTED
SPECTRUM

FIG. 3

ENERGY, keV

FIG. 4

FIG. 4a

FIG. 5a

FIG. 5b

FIG. 5c

FIG. 6

FIG. 7

FIG. 8

SEPARATOR
87

FIG. 9